# FASCICULE DE BREVET EUROPEEN

(11) **EP 1 202 930 B1**
(45) Date de publication et mention de la délivrance du brevet: **03.11.2004**
(21) Numéro de dépôt: 00951587.5
(22) Date de dépôt: 14.06.2000
(51) Int. Cl.: C01B 25/37, C01B 25/45, C23C 18/12, C09K 3/14

(54) **SOL D'UN PHOSPHATE DE CERIUM ET/OU DE LANTHANE, PROCEDE DE PREPARATION ET UTILISATION EN POLISSAGE**
CERIUM- UND/ODER LANTHANPHOSPHATSOL, HERSTELLUNGSVERFAHREN UND VERWENDUNG ZUM POLIEREN
CERIUM PHOSPHATE AND/OR LANTHANUM SOL, PREPARATION METHOD AND USE FOR POLISHING

(30) Priorité: 16.06.1999 FR 9907620
(43) Date de publication de la demande: 08.05.2002
(73) Titulaire: RHODIA CHIMIE, 92408 Courbevoie Cédex (FR)
(72) Inventeur: BRACONNIER, Jean-Jacques, F-17140 Lagord (FR)
(74) Mandataire: Dubruc, Philippe
(86) Numéro de dépôt international: PCT/FR2000/001651
(87) Numéro de publication internationale: WO 2000/076918

(56) Documents cités:
- EP-A- 0 498 689
- EP-A- 0 581 622
- EP-A- 0 685 549
- EP-A- 0 902 103
- BOAKYE E ET AL: "Porous aluminum oxide and lanthanum phosphate fiber coatings" PROCEEDINGS OF THE 1996 20TH ANNUAL CONFERENCE ON COMPOSITES, ADVANCED CERAMICS, MATERIALS, AND STRUCTURES - B;COCOA BEACH, FL, USA JAN 7-11 1996, vol. 17, no. 4, 1996, pages 53-60, XP002129770 Ceram Eng Sci Proc;Ceramic Engineering and Science Proceedings 1996 American Ceramic Soc, Westerville, OH, USA
- PENG CHEN ET AL: "Synthesis and characterization of lanthanum phosphate sol for fibre coating" JOURNAL OF MATERIALS SCIENCE, 15 JULY 1997, CHAPMAN & HALL, UK, vol. 32, no. 14, pages 3863-3867, XP002129771 ISSN: 0022-2461
- CHEMICAL ABSTRACTS, vol. 129, no. 3, 20 juillet 1998 (1998-07-20) Columbus, Ohio, US; abstract no. 31047, SHJI HIROMASA ET AL.: "Corrosion-resistant surface-treated metal sheets with high chromium leaching resistance" XP002129788 & JP 10 147888 A (NIPPON STEEL CORP.) 2 juin 1998 (1998-06-02)
- CHEMICAL ABSTRACTS, vol. 130, no. 18, 3 mai 1999 (1999-05-03) Columbus, Ohio, US; abstract no. 240413, SHOJI HIROMASA ET AL.: "Surface-treated metal material having corrosion-resistant coating" XP002129789 & JP 11 061429 A (NIPPON STEEL CORP.) 5 mars 1999 (1999-03-05)

## Description

La présente invention concerne un sol d'un phosphate de cérium et/ou de lanthane, un procédé de préparation d'un tel sol et l'utilisation de ce sol en polissage notamment.

Le développement de l'industrie de l'électronique nécessite l'utilisation de plus en plus importante de compositions pour le polissage de diverses pièces comme les disques ou les composés diélectriques. Ces compositions se présentent sous la forme de suspensions et elles doivent répondre à un certain nombre de caractéristiques. Par exemple, elles doivent offrir un taux d'enlèvement de matière élevé qui traduit leur capacité abrasive. Elles doivent aussi présenter une défectivité la plus basse possible, on entend par défectivité le taux de rayures que présente le substrat une fois traité par la composition. On peut aussi demander une certaine sélectivité de la composition vis à vis d'un métal. On comprend donc que la mise au point de ces compositions est un problème complexe. II existe donc un besoin pour ces compositions de polissage.

On connaît par ailleurs par EP-A-498689 et EP-A-581622 des procédés de préparation de phosphates de terres rares mais ces procédés conduisent à des luminophores solides et non pas à des sols.

Dans « Proceedings of the 1996 20^{TH} Annual Conference on Composites, Advanced Ceramics, Materials, and Structures, » vol.17, n°4, 1996, pp.53-60, Boakye et al décrivent un sol de phosphate de lanthane, obtenu par peptisation avec de l'acide nitrique.

Dans l'article du « Journal of Material Science », Juillet 1997, vol.32, n°14, pp.3863-3867, on décrit un sol de lanthane obtenu par attaque à l'acide phosphorique d'oxyde ou d'hydroxyde de lanthane.

L'article des Chemical Abstracts N° 31047, vol.129, n°3, décrit des traitements de surface par des phosphates de terres rares de même que EP-A-902103. Toutefois, ces deux documents ne décrivent pas de procédés de préparation de sols.

L'objet de l'invention est de fournir de tels sols de phosphates de terres rares et un procédé de préparation de ceux-ci.

Dans ce but, le sol selon l'invention est caractérisé en ce qu'il comprend :
- une phase aqueuse;
- des particules d'un phosphate de cérium ou d'un phosphate de cérium et de lanthane;
- un acide A autre que l'acide phosphorique dont les sels de cérium sont solubles dans l'eau.

Selon une variante, le sol de l'invention est caractérisé en ce qu'il comprend :
- une phase aqueuse;
- des particules d'un phosphate de lanthane;
- un acide B autre que l'acide phosphorique dont les sels de lanthane sont solubles dans l'eau et dont le pKa est d'au moins 3.

Par ailleurs, l'invention concerne aussi un procédé de préparation d'un sol d'un phosphate d'au moins une terre rare choisie parmi le cérium et le lanthane qui, selon un premier mode de réalisation, est caractérisé en ce qu'il comprend les étapes suivantes : on mélange une solution de sets d'au moins une terre rare précitée avec des ions phosphates dans un rapport molaire PO₄³⁻/terre rare supérieur à 1 avec contrôle du pH du milieu de réaction à une valeur supérieure à 2; on procède à un mûrissement du précipité ainsi obtenu si la valeur du pH du milieu de réaction est comprise entre 2 et 6; on sépare le précipité du milieu de réaction; on remet en dispersion dans l'eau ledit précipité; on ajoute à la dispersion ainsi obtenue
soit au moins un sel de la terre rare précitée et de l'acide A précité dans le cas de la préparation d'un sol de phosphate de cérium ou de phosphate de cérium et de lanthane;
soit au moins un sel de la terre rare précitée et de l'acide B précité dans le cas de la préparation d'un sol de phosphate de lanthane;
et dans une quantité telle que le rapport molaire final PO₄³⁻/terre rare dans la dispersion soit égal à 1.

Selon une second mode de réalisation de l'invention, le procédé de préparation d'un sol d'un phosphate d'au moins une terre rare choisie parmi le cérium et le lanthane, est caractérisé en ce qu'il comprend les étapes suivantes : on introduit, en continu et sous agitation, une première solution de sels d'au moins une terre rare précitée, dans une seconde solution contenant des ions phosphates et présentant un pH initial inférieur à 2; les ions phosphates étant présents dans une quantité telle que le rapport molaire PO₄³⁻/terre rare est supérieur à 1; on contrôle au cours de la précipitation le pH du milieu de précipitation à une valeur sensiblement constante et inférieure à 2; on sépare le précipité du milieu de réaction; on remet en dispersion dans l'eau ledit précipité; on ajoute à la dispersion ainsi obtenue
soit au moins un sel de la terre rare précitée et de l'acide A précité dans le cas de la préparation d'un sol de phosphate de cérium ou de phosphate de cérium et de lanthane;
soit au moins un sel de la terre rare précitée et de l'acide B précité dans le cas de la préparation d'un sol de phosphate de lanthane;
et dans une quantité telle que le rapport molaire final PO₄³⁻/terre rare dans la dispersion soit égal à 1.

D'autres caractéristiques, détails et avantages de l'invention apparaîtront encore plus complètement à la lecture de la description qui va suivre, ainsi que des divers exemples concrets mais non limitatifs destinés à l'illustrer.

L'invention concerne un sol d'un phosphate de terre rare, la terre rare étant le cérium ou le lanthane et plus précisément d'un orthophosphate de formule LnPO₄, Ln désignant la terre rare. Cet orthophosphate est hydraté et il présente une structure hexagonale. L'invention s'applique bien entendu aux phosphates mixtes de cérium et de lanthane (La,Ce)PO₄ et le terme phosphate de terre rare sera utilisé d'une manière générale dans le reste de la description dans le sens qui vient d'être donné dans le présent paragraphe.

Pour la suite de la description, l'expression sol ou dispersion colloïdale de phosphate de terre rare désigne tout système constitué de fines particules solides de dimensions colloïdales à base de ce phosphate en suspension dans une phase liquide, ledit phosphate pouvant en outre, éventuellement, contenir des quantités résiduelles d'ions liés ou adsorbés tels que par exemple des nitrates, des acétates, des citrates ou des ammoniums. On notera que dans de telles dispersions, le phosphate peut se trouver soit totalement sous la forme de colloïdes, soit simultanément sous la forme d'ions et sous la forme de colloïdes.

Les particules de phosphate de terre rare présentent généralement un diamètre moyen d'au plus 200nm. Ces particules sont constituées de l'agglomération de cristaux élémentaires, généralement de forme aciculaire, de 5nm à 20nm d'épaisseur environ et de longueur de quelques dizaines de nanomètres, notamment comprise entre environ 25nm et environ 200nm. On précise ici que le diamètre moyen des particules ou colloïdes est mesuré par analyse granulométrique Sédigraph et que les formes et dimensions des cristaux élémentaires sont déterminées par microscopie électronique.

Selon une caractéristique de l'invention, le sol contient en outre un acide. Cet acide est un acide autre que l'acide phosphorique. Il s'agit d'un acide choisi parmi ceux dont les sels de lanthane et de cérium sont solubles dans l'eau. Cet acide peut être notamment un acide organique. Cet acide peut plus particulièrement être choisi parmi ceux dont le pKa est d'au moins 3. On peut citer à titre d'exemples l'acide nitrique, l'acide acétique, l'acide formique, l'acide citrique, l'acide propionique. L'acide peut être présent sous une forme quelconque, dissociée ou non dissociée.

Le sol de l'invention présente de préférence un pH d'au moins 4. Ce pH peut être plus particulièrement compris entre 4 et 6 et encore plus particulièrement entre 4,5 et 5,5. La valeur du pH du sol peut être fixée à des valeurs différentes en fonction du pKa de l'acide utilisé.

La concentration du sol peut varier dans de larges limites par exemple entre 0,01 et 2 moles de LnPO₄ par litre.

Le procédé de préparation du sol de l'invention va maintenant être décrit. Ce procédé peut être mis en oeuvre selon deux modes de réalisation.

Le premier mode de réalisation correspond à un procédé du type de celui décrit dans la demande de brevet européen EP-A-498689 dont l'enseignement est incorporé ici.

Comme indiqué plus haut, ce premier mode comprend une première étape dans laquelle on mélange une solution de sels d'au moins une terre rare précitée avec des ions phosphates dans un rapport molaire PO₄³⁻/terre rare supérieur à 1 avec contrôle du pH du milieu de réaction à une valeur supérieure à 2.

Les sels de terres rares convenables sont notamment les sels solubles en milieu aqueux, comme par exemple les nitrates, chlorures, acétates, carboxylates, ou un mélange de ceux-ci.

Les ions phosphates destinés à réagir avec la solution des sels de terres rares peuvent être apportés par des composés purs ou en solution, comme par exemple l'acide phosphorique, les phosphates d'alcalins ou d'autres éléments métalliques donnant avec les anions associés aux terres rares un composé soluble. Les ions phosphates sont ajoutés de préférence sous forme d'une solution d'un phosphate d'ammonium qui peut être plus particulièrement le phosphate diammonique ou monoammonique.

Les ions phosphates sont présents en quantité telle que l'on ait dans le milieu de réaction un rapport molaire PO₄³⁻/terre rare supérieur à 1, et avantageusement compris entre 1,1 et 3.

Par "pH contrôlé", on entend un maintien du pH du milieu de précipitation à une certaine valeur, constante ou sensiblement constante, par addition de composés basiques ou de solutions tampons, dans le milieu. Le pH du milieu variera ainsi d'au plus 0,5 unité de pH autour de la valeur de consigne fixée, et de préférence encore d'au plus 0,1 unité de pH autour de cette valeur.

Le mélange de la solution du sel de terre rare et des ions phosphates produit un précipité. Le précipité subit un mûrissement dans le milieu de précipitation, après la fin du mélange, pendant une durée qui peut varier, par exemple, entre 15min environ et 10 heures environ, et ceci quand la précipitation a été faite à un pH compris entre 2 et 6 environ. Ce mûrissement permet d'obtenir un produit qui est filtrable. Cette étape de mûrissement n'est pas nécessaire quand le pH du milieu de précipitation est supérieur à 6. Toutefois, il peut être mis en oeuvre ce qui permet d'améliorer encore la filtrabilité du précipité. Le mûrissement peut être effectué à une température quelconque, par exemple comprise entre 15°C et 100°C.

Le contrôle du pH est avantageusement réalisé par addition d'un composé basique. Comme composé basique convenable, on peut citer, à titre d'exemples, les hydroxydes métalliques (NaOH, KOH, CaOH₂,....) ou l'hydroxyde d'ammonium, ou tout autre composé basique dont les espèces le constituant ne formeront aucun précipité lors de leur addition dans le milieu réactionnel, par combinaison avec une des espèces par ailleurs contenues dans ce milieu, et permettant un contrôle du pH du milieu de précipitation. Un composé basique préféré de l'invention est l'ammoniac, mis en oeuvre avantageusement sous forme de solution aqueuse.

La précipitation est réalisée de préférence en milieu aqueux à une température qui n'est pas critique et qui est comprise, avantageusement, entre la température ambiante (15°C - 25°C) et 100°C. Cette précipitation a lieu sous agitation du milieu de réaction.

Le précipité obtenu peut être séparé du milieu réactionnel par tout moyen convenable, notamment par filtration. II peut être lavé par exemple avec de l'eau pour éliminer d'éventuelles impuretés.

Le précipité est ensuite remis en dispersion dans l'eau. On ajoute enfin à la dispersion ainsi obtenue au moins un sel de la terre rare précitée et de l'acide précité autre que l'acide phosphorique dans une quantité telle que le rapport molaire final PO₄³⁻ /terre rare dans la dispersion soit égal à 1. Cette addition se fait sous agitation et, éventuellement, à chaud. On peut effectuer un mûrissement d'une durée comprise entre 15 minutes et 1 heure.

On obtient à l'issue de cette dernière étape la dispersion ou le sol de phosphate de terre rare selon l'invention. Ce sol est stable.

Le procédé de préparation peut aussi être mis en oeuvre selon un deuxième mode de réalisation qui est un mode préféré. Ce deuxième mode correspond au procédé décrit dans la demande de brevet EP-A-581622 dont l'enseignement est incorporé ici.

La première étape de ce procédé consiste à introduire, en continu et sous agitation, une première solution de sels d'au moins une terre rare précitée, dans une seconde solution contenant des ions phosphates et présentant un pH initial inférieur à 2; on contrôle au cours de la précipitation le pH du milieu de précipitation à une valeur sensiblement constante et inférieure à 2.

Tout ce qui a été dit plus haut dans le cas du premier mode de réalisation pour les paramètres de précipitation et notamment au sujet des sels de terres rare, des ions phosphates (rapport molaire PO₄³⁻/terre rare supérieur à 1) et du contrôle du pH s'applique aussi ici.

On précisera cependant qu'un certain ordre d'introduction des réactifs doit être respecté, et, plus précisément encore, la solution de sels solubles de la ou des terres rares doit être introduite, progressivement et en continu, dans la solution contenant les ions phosphates. On précisera aussi que la solution contenant les ions phosphates doit présenter initialement (c'est à dire avant le début de l'introduction de la solution de sels de terres rares) un pH inférieur à 2, et de préférence compris entre 1 et 2. Aussi, si la solution utilisée ne présente pas naturellement un tel pH, ce dernier est amené à la valeur convenable désirée soit par ajout d'une base (par exemple de l'ammoniaque, dans le cas d'une solution initiale d'acide phosphorique) soit par ajout d'un acide (par exemple de l'acide nitrique, dans le cas d'une solution initiale de phosphate diammonique).

Par la suite, au cours de l'introduction de la solution contenant le ou les sels de terres rares, le pH du milieu de précipitation diminue progressivement; aussi, pour maintenir le pH du milieu de précipitation à la valeur constante de travail désirée, laquelle doit être inférieure à 2 et de préférence comprise entre 1 et 2, on introduit simultanément dans ce milieu un composé basique.

A l'issue de la réaction, on recueille un précipité qui est traité de la même manière que celle décrite dans le cas du premier mode pour obtenir le sol de l'invention.

L'invention concerne aussi une suspension pour polissage comprenant un sol tel que décrit plus haut ou encore un sol tel qu'obtenu par les procédés décrits précédemment. Cette suspension peut être utilisée au polissage du verre, par exemple dans l'industrie de la cristallerie, de la glacerie, du verre plat, des écrans de télévision, des lunettes, ou encore au polissage des matières céramiques ou autres matériaux de type vitreux. Cette suspension peut aussi être utilisée tout particulièrement pour le polissage de type CMP dans l'industrie de l'électronique. Dans ce cas, elle est particulièrement adaptée au polissage des substrats métalliques entrant dans la constitution des microprocesseurs, ces substrats pouvant être en cuivre, en aluminium, en nitrure de titane ou en tungstène.

Généralement, de tels suspensions comprennent, outre le composé à propriété abrasive comme le sol de l'invention, des additifs comme un dispersant ou un oxydant.

Le sol de l'invention peut être utilisé aussi sur un substrat en tant qu'agent anticorrosion, par exemple sur des substrats métalliques et notamment des substrats en acier.

L'état du substrat avant le traitement ne nécessite pas d'intervention particulière, si ce n'est les traitements classiques de dégraissage et de nettoyage. Les substrats peuvent être ou non pré-oxydés.

Le dépôt sur le substrat peut être réalisé directement à partir du sol en utilisant des techniques classiques de revêtement du type trempage ou pulvérisation par exemple.

Le substrat doit être ensuite traité thermiquement afin d'éliminer l'eau notamment.

Le traitement thermique se fait généralement à une température d'au plus 600°C. Cette température peut être plus basse, par exemple d'au plus 400°C, en fonction de la nature des substrats.

Le sol de l'invention peut être utilisé enfin comme agent anti-UV, par exemple dans les plastiques.

Des exemples non limitatifs vont maintenant être donnés.

### EXEMPLE 1

Cet exemple concerne la préparation d'un sol de phosphate de cérium selon l'invention.

On part d'une solution d'acide phosphorique à 2mol/l, chauffée à 60°C et préneutralisée à un pH de 1,5 par de l'ammoniaque à 6mol/l. On y ajoute en continu et en une heure une solution de nitrate de cérium à 2mol/l. La quantité de solution est déterminée pour avoir un rapport molaire PO₄³⁻/terre rare de 1,1. Le pH du milieu réactionnel est régulé à 1,5 par addition d'ammoniaque de concentration de 6mol/l. La concentration finale en phosphate de cérium précipité est de 0,75mol/l.

On mûrit le mélange réactionnel 30 minutes à 60°C. On filtre puis on lave à l'eau froide. On sèche sur un Buchner pendant 15 minutes.

Le phosphate humide obtenu présente un excès d'ions PO₄³⁻ de 0,6.10⁻³mole/g. 4,5kg de ce phosphate sont dispersés dans 301 d'eau permutée, puis après agitation, on rajoute 974g d'acétate de cérium de façon que le rapport PO₄³⁻/Ce soit ramené à 1.

On laisse mûrir le mélange 30 minutes à température ambiante.

La concentration finale du sol est de 100g/l en phosphate de cérium, le pH est de 4,8.

L'analyse par microscopie MET montre que le phosphate se présente sous forme de particules constituées de cristaux aciculaires de longueur allant jusqu'à 170nm et de largeur comprise entre 5 et 20nm.

### EXEMPLE 2

On procède comme dans l'exemple 1 jusqu'à l'obtention d'un phosphate de cérium humide présentant un excès d'ions PO₄³⁻ de 0,5.10⁻³ mole/g de phosphate de cérium humide par rapport à la stoechiométrie exacte.

189g de ce phosphate de cérium sont dispersés dans 1 litre d'eau permutée sous agitation et à 20°C.

On ajoute à cette dispersion à 20°C et sous agitation 55g de nitrate de cérium en solution, de façon que le rapport PO₄³⁻/terre rare soit ramené à 1.

Le mélange subit un mûrissement de 30min à 20°C.

La concentration finale de ce sol est de 110g/l en phosphate de cérium et son pH est de 1,4.

### EXEMPLE 3

Cet exemple concerne la préparation d'un sol de phosphate de lanthane selon l'invention.

La précipitation du phosphate de lanthane est identique à celle du phosphate de cérium des exemples précédents. Le phosphate de lanthane humide obtenu présente un excès d'ions PO4³⁻ de 6,6.10⁻⁴ mole/g de phosphate de lanthane humide par rapport à la stoechiométrie exacte.

170 g de phosphate de lanthane humide sont dispersés dans 1,1 litres d'eau permutée sous agitation et à 20°C.

On ajoute à cette dispersion à 20°C et sous agitation 24 g d'acétate de lanthane La(CH₃COO)₃,1,3H₂O, de façon que le rapport PO4³⁻/terre rare soit ramené à 1.

Le mélange subit un mûrissement de 30min à 20°C.

La concentration finale de ce sol est de 100g/l en phosphate de lanthane et son pH est de 4,5.

### EXEMPLE 4

On part d'un phosphate de lanthane humide obtenu comme dans l'exemple 3 mais présentant un excès d'ions PO₄³⁻ de 3,9.10⁻³ mole/g de phosphate de lanthane humide par rapport à la stoechiométrie exacte.

113,6g de ce phosphate de lanthane sont dispersés dans 0,74 litre d'eau permutée sous agitation et à 20°C.

On ajoute à cette dispersion à 20°C et sous agitation 26,8g de nitrate de lanthane en solution, de façon que le rapport PO₄³⁻/terre rare soit ramené à 1.

Le mélange subit un mûrissement de 20min à 20°C.

La concentration finale de ce sol est de 100g/l en phosphate de lanthane et son pH est de 1,36.

### EXEMPLE 5

Cet exemple concerne l'utilisation du sol de l'exemple 1 dans le polissage.

Le polissage est effectué sur des substrats (wafers) revêtus de tungstène, de nitrure de titane, de cuivre ou d'aluminium.

Les conditions opératoires sont les suivantes :
Machine LOGITECH PM5 CMP, avec analyse de planéarité sur 4 points;
Force de pression de 2psi (1,4. 10⁴Pa);
Concentration du sol : 1% en poids; débit de sol : 100ml/min;
Vitesse du plateau : 33t/min

Les résultats sont donnés dans le tableau ci-dessous.

| Substrat | Al | TiN₂ | Cu | W |
|---|---|---|---|---|
| Taux d'enlèvement en Å/min | 5200 | 66 | 1410 | 21 |

## Revendications

1. Sol **caractérisé en ce qu'**il comprend :
- une phase aqueuse;
- des particules d'un phosphate de cérium ou d'un phosphate de cérium et de lanthane;
- un acide A autre que l'acide phosphorique dont les sels de cérium sont solubles dans l'eau.

2. Sol selon la revendication 1, **caractérisé en ce que** l'acide précité est choisi parmi les acides de pKa d'au moins 3.

3. Sol **caractérisé en ce qu'**il comprend :
- une phase aqueuse;
- des particules d'un phosphate de lanthane;
- un acide B autre que l'acide phosphorique dont les sels de lanthane sont solubles dans l'eau et dont le pKa est d'au moins 3.

4. Sol selon la revendication 1 ou 3, **caractérisé en ce que** l'acide A précité est choisi parmi l'acide nitrique, l'acide acétique, l'acide formique, l'acide citrique, l'acide propionique et l'acide B précité est choisi parmi l'acide acétique, l'acide formique, l'acide citrique, l'acide propionique.

5. Sol selon l'une des revendications précédentes, **caractérisé en ce qu'**il présente un pH d'au moins 4, plus particulièrement compris entre 4 et 6.

6. Sol selon l'une des revendications précédentes, **caractérisé en ce que** les particules de phosphate de terre rare sont constituées de cristaux élémentaires de 5nm à 20nm d'épaisseur et de longueur comprise entre 25nm et 200nm.

7. Procédé de préparation d'un sol d'un phosphate d'au moins une terre rare choisie parmi le cérium et le lanthane, selon l'une quelconque des revendications 1 à 6, **caractérisé en ce qu'**il comprend les étapes suivantes :
- on mélange une solution de sels d'au moins une terre rare précitée avec des ions phosphates dans un rapport molaire PO₄³⁻/terre rare supérieur à 1 avec contrôle du pH du milieu de réaction à une valeur supérieure à 2;
- on procède à un mûrissement du précipité ainsi obtenu si la valeur du pH du milieu de réaction est comprise entre 2 et 6;
- on sépare le précipité du milieu de réaction;
- on remet en dispersion dans l'eau ledit précipité;
- on ajoute à la dispersion ainsi obtenue
soit au moins un sel de la terre rare précitée et de l'acide A précité dans le cas de la préparation d'un sol de phosphate de cérium ou de phosphate de cérium et de lanthane;
soit au moins un sel de la terre rare précitée et de l'acide B précité dans le cas de la préparation d'un sol de phosphate de lanthane;
et dans une quantité telle que le rapport molaire final PO₄³⁻/terre rare dans la dispersion soit égal à 1.

8. Procédé de préparation d'un sol d'un phosphate d'au moins une terre rare choisie parmi le cérium et le lanthane, selon l'une' quelconque des revendications 1 à 6, **caractérisé en ce qu'**il comprend les étapes suivantes:
- on introduit, en continu et sous agitation, une première solution de sels d'au moins une terre rare précitée, dans une seconde solution contenant des ions phosphates et présentant un pH initial inférieur à 2, les ions phosphates étant présents dans une quantité telle que le rapport molaire PO₄³⁻/terre rare est supérieur à 1;
- on contrôle au cours de la précipitation le pH du milieu de précipitation à une valeur sensiblement constante et inférieure à 2;
- on sépare le précipité du milieu de réaction;
- on remet en dispersion dans l'eau ledit précipité;
- on ajoute à la dispersion ainsi obtenue
soit au moins un sel de la terre rare précitée et de l'acide A précité dans le cas de la préparation d'un sol de phosphate de cérium ou de phosphate de cérium et de lanthane;
soit au moins un sel de la terre rare précitée et de l'acide B précité dans le cas de la préparation d'un sol de phosphate de lanthane;
et dans une quantité telle que le rapport molaire final PO₄³⁻/terre rare dans la dispersion soit égal à 1.

9. Procédé selon l'une des revendications 7 ou 8, **caractérisé en ce que** le contrôle du pH du milieu de précipitation est réalisé par addition d'un composé basique.

10. Procédé selon la revendication 9, **caractérisé en ce que** ledit composé basique est l'hydroxyde d'ammonium.

11. Procédé selon l'une des revendications 7 à 10, **caractérisé en ce que** lesdits ions phosphates sont sous forme d'une solution d'un phosphate d'ammonium, plus particulièrement le phosphate monoammonique et le phosphate diammonique.

12. Suspension pour polissage, **caractérisée en ce qu'**elle comprend un sol selon l'une des revendications 1 à 6 ou un sol tel qu'obtenu par le procédé selon l'une des revendications 7 à 11.

13. Utilisation sur un substrat comme agent anticorrosion d'un sol selon l'une des revendications 1 à 6 ou d'un sol tel qu'obtenu par le procédé selon l'une des revendications 7 à 11.

14. Utilisation comme agent anti-UV d'un sol selon l'une des revendications 1 à 6 ou d'un sol tel qu'obtenu par le procédé selon l'une des revendications 7 à 11.

## Patentansprüche

1. Sol, **dadurch gekennzeichnet, daß** es umfaßt:
- eine wäßrige Phase;
- Teilchen eines Phosphates von Cerium oder eines Phosphates von Cerium und Lanthan;
- eine Säure A, die anders ist als.Phosphorsäure und deren Ceriumsalze in Wasser löslich sind.

2. Sol nach Anspruch 1, **dadurch gekennzeichnet, daß** die vorstehend genannte Säure unter den Säuren mit einem pKa von mindestens 3 ausgewählt wird.

3. Sol, **dadurch gekennzeichnet, daß** es umfaßt:
- eine wäßrige Phase;
- Teilchen eines Phosphates von Lanthan;
- eine Säure B, die anders ist als Phosphorsäure, deren Lanthansalze in Wasser löslich sind und deren pKa mindestens 3 beträgt.

4. Sol nach Anspruch 1 oder 3, **dadurch gekennzeichnet, daß** die vorstehend genannte Säure A unter Salpetersäure, Essigsäure, Ameisensäure, Citronensäure und Propionsäure ausgewählt wird, und die vorstehend genannte Säure B unter Essigsäure, Ameisensäure, Citronensäure und Propionsäure ausgewählt wird.

5. Sol nach einem der vorstehenden Ansprüche, **dadurch gekennzeichnet, daß** es einen pH-Wert von mindestens 4, ganz besonders zwischen 4 und 6 aufweist.

6. Sol nach einem der vorstehenden Ansprüche, **dadurch gekennzeichnet, daß** die Teilchen des Phosphates der Seltenen Erde aus elementaren Kristallen von 5 nm bis 20 nm Dicke und einer Länge zwischen 25 nm und 200 nm bestehen.

7. Verfahren zur Herstellung eines Sols von einem Phosphat von mindestens einer Seltenen Erde, ausgewählt unter Cerium und Lanthan, nach irgendeinem der Ansprüche 1 bis 6, **dadurch gekennzeichnet, daß** es die folgenden Stufen umfaßt:
- man mischt eine Lösung der Salze von mindestens einer vorstehend genannten Seltenen Erde mit Phosphationen in einem molaren Verhältnis PO₄³⁻/Seltene Erde von höher als 1, mit Kontrolle des pH-Wertes des Reaktionsmediums auf einem Wert von höher als 2;
- man nimmt eine Reifung des auf diese Weise erhaltenen Niederschlages vor, wenn der pH-Wert des Reaktionsmediums zwischen 2 und 6 beträgt;
- man trennt den Niederschlag von dem Reaktionsmedium ab;
- man bringt den genannten Niederschlag wieder in Wasser in Dispersion;
- man gibt zu der auf diese Weise erhaltenen Dispersion
. entweder mindestens ein Salz der vorstehend genannten Seltenen Erde und die vorstehend genannte Säure A in dem Fall der Herstellung eines Sols von Phosphat von Cerium oder von Phosphat von Cerium und Lanthan;
. oder mindestens ein Salz der vorstehend genannten Seltenen Erde und die vorstehend genannte Säure B in dem Fall der Herstellung eines Sols von Phosphat von Lanthan;
und zwar in einer derartigen Menge, daß das molare Endverhältnis PO₄³⁻/Seltene Erde in der Dispersion gleich 1 ist.

8. Verfahren zur Herstellung eines Sols von einem Phosphat von mindestens einer Seltenen Erde, ausgewählt unter Cerium und Lanthan, nach irgendeinem der Ansprüche 1 bis 6, **dadurch gekennzeichnet, daß** es die folgenden Stufen umfaßt:
- man trägt kontinuierlich und unter Rühren eine erste Lösung der Salze von mindestens einer vorstehend genannten Seltenen Erde in eine zweite Lösung ein, die Phosphationen enthält und einen anfänglichen pH-Wert von unter 2 aufweist, wobei die Phosphationen in einer solchen Menge vorliegen, daß das molare Verhältnis PO₄³⁻/Seltene Erde über 1 beträgt;
- man kontrolliert im Verlauf der Fällung den pH-Wert des Medium der Fällung auf einem etwa konstanten Wert von unterhalb 2;
- man trennt den Niederschlag von dem Reaktionsmedium ab;
- man bringt den genannten Niederschlag wieder in Wasser in Dispersion;
- man gibt zu der auf diese Weise erhaltenen Dispersion
. entweder mindestens ein Salz der vorstehend genannten Seltenen Erde und die vorstehend genannte Säure A in dem Fall der Herstellung eines Sols von Phosphat von Cerium oder von Phosphat von Cerium und Lanthan;
. oder mindestens ein Salz der vorstehend genannten Seltenen Erde und die vorstehend genannte Säure B in dem Fall der Herstellung eines Sols von Phosphat von Lanthan;
und zwar in einer derartigen Menge, daß das molare Endverhältnis PO₄³⁻/Seltene Erde in der Dispersion gleich 1 ist.

9. Verfahren nach einem der Ansprüche 7 oder 8, **dadurch gekennzeichnet, daß** die Kontrolle des pH-Wertes des Fällungsmediums durch Zugabe einer basischen Verbindung realisiert wird.

10. Verfahren nach Anspruch 9, **dadurch gekennzeichnet, daß** die genannte basische Verbindung Ammoniumhydroxid ist.

11. Verfahren nach einem der Ansprüche 7 bis 10, **dadurch gekennzeichnet, daß** die genannten Phosphationen in Form einer Lösung eines Ammoniumphosphates, ganz besonders Monoammoniumphosphat und Diammoniumphosphat vorliegen.

12. Suspension zum Polieren, **dadurch gekennzeichnet, daß** sie ein Sol nach einem der Ansprüche 1 bis 6 oder ein Sol, wie es durch das Verfahren nach einem der Ansprüche 7 bis 11 erhalten wird, umfaßt.

13. Verwendung eines Sols nach einem der Ansprüche 1 bis 6 oder eines Sols, wie es durch das Verfahren nach einem der Ansprüche 7 bis 11 erhalten wird, als Antikorrosionsmittel auf einem Substrat.

14. Verwendung eines Sols nach einem der Ansprüche 1 bis 6 oder eines Sols, wie es durch das Verfahren nach einem der Ansprüche 7 bis 11 erhalten wird, als Anti-UV-Mittel.

## Claims

1. A sol, **characterised in that** it comprises:
- an aqueous phase;
- particles of a cerium phosphate or a cerium and lanthanum phosphate;
- an acid A other than phosphoric acid, the cerium salts of which are soluble in water.

2. A sol according to claim 1, **characterised in that** said acid is selected from acids with a pKa of at least 3.

3. A sol, **characterised in that** it comprises:
- an aqueous phase;
- particles of a lanthanum phosphate;
- an acid B other than phosphoric acid, the lanthanum salts of which are soluble in water, and the pKa of which is at least 3.

4. A sol according to claims 1 or 3, **characterised in that** said acid A is selected from nitric acid, acetio acid, formic acid, citric acid, propionic acid, and said acid B is selected from acetic acid, formic acid, citric acid, propionic acid.

5. A sol according to one of the preceding claims, **characterised in that** its pH is at least 4, more particularly in the range of 4 to 6.

6. A sol according to one of the preceding claims, **characterised in that** the rare earth phosphate particles are constituted by elementary crystals 5nm to 20nm thick and in the range 25 nm to 200 nm in length.

7. A process for preparing a sol of a phosphate of at least one rare earth selected from cerium and lanthanum according to any one of claims 1 to 6, **characterised in that** it comprises the following steps:
- mixing a solution of salts of at least one of said rare earths with phosphate ions in a PO₄³⁻/rare earth molar ratio of more than 1 with control of the pH of the reaction medium to a value of more than 2;
- then ageing of the precipitate thus obtained if the value of the pH of the reaction medium is in the range 2 to 6;
- separating the precipitate from the reaction medium;
- re-dispersing said precipitate in water;
- adding to the dispersion thus obtained
either at least one salt of said rare earth and of said acid A, in the case of preparing a sol of cerium phosphate or of cerium and lanthanum phosphate;
or at least one salt of said rare earth and of said acid B, in the case of preparing a sol of lanthanum phosphate;
and in a quantity such that the final PO₄³⁻/rare earth molar ratio in the dispersion is equal to 1.

8. A process for preparing a sol of a phosphate of at least one rare earth selected from cerium and lanthanum, according to any one of claims 1 to 6, **characterised in that** it comprises the following steps:
- continuously introducing, with stirring, a first solution of salts of at least one of said rare earths into a second solution containing phosphate ions and with an initial pH of less than 2, the phosphate ions being present in a quantity such that the PO₄³⁻/rare earth molar ratio is more than 1;
- controlling the pH of the precipitation medium to a substantially constant value of less than 2 during precipitation;
- separating the precipitate from the reaction medium;
- re-dispersing said precipitate in water;
- adding to the dispersion thus obtained
either at least one salt of said rare earth and of said acid A in the case of preparing a sol of cerium phosphate or of cerium and lanthanum phosphate;
or at least one salt of said rare earth and of said acid B in the case of preparing a sol of lanthanum phosphate;
and in a quantity such that the final PO₄³⁻/rare earth molar ratio in the dispersion is equal to 1.

9. A process according to one of claim 7 or 8, **characterized in that** the pH of the precipitation medium is controlled by adding a basic compound.

10. A process according to claim 9, **characterized in that** said basic compound is ammonium hydroxide.

11. A process according to any one of claims 7 to 10, **characterized in that** said phosphate ions are in the form of an ammonium phosphate solution, more particularly mono-ammonium phosphate or diammonium phosphate.

12. A polishing suspension, **characterized in that** it comprises a sol according to any one of claims 1 to 6 or a sol as obtained by the process of any one of claims 7 to 11.

13. Use of a sol according to any one of claims 1 to 6 or a sol as obtained by the process of any one of claims 7 to 11, on a substrate as an anti-corrosion agent.

14. Use of a sol according to any one of claims 1 to 6 or a sol as obtained by the process of any one of claims 7 to 11, as an anti-UV agent.
